# EUROPEAN PATENT SPECIFICATION

(11) **EP 1 709 229 B1**
(45) Date of publication and mention of the grant of the patent: **13.05.2009**
(21) Application number: 05807482.4
(22) Date of filing: 28.01.2005
(51) Int. Cl.: D04H 13/00, A47C 27/00

(54) **MULTILAYER SPUNLACED NONWOVEN FIRE BLOCKING COMPOSITE**
MEHRSCHICHTIGER SPUNLACE-VLIESSTOFF ALS FEUERBLOCKIERENDER VERBUND
MULTICOUCHE NON TISSÉ HYDROLIÉ RESISTANT AU FEU

(30) Priority: 30.01.2004 US 769126
(43) Date of publication of application: 11.10.2006
(73) Proprietor: E.I. DU PONT DE NEMOURS AND COMPANY, Wilmington, DE 19898 (US)
(72) Inventor: BASCOM, Laurence, N., Amelia, Virginia 23002 (US); KNOFF, Warren, F., Richmond, Virginia 23220 (US)
(74) Representative: Heinemann, Monica
(86) International application number: PCT/US2005/003334
(87) International publication number: WO 2006/019401

(56) References cited:
- WO-A-03/023108
- US-B1- 6 596 658

## Description

### BACKGROUND OF THE INVENTION

### 1. Field of the Invention

This invention relates to a multilayer spunlaced nonwoven composite useful as a fire blocking component for an article, an article such as furniture or a mattress or foundation comprising the nonwoven composite, and processes for making the nonwoven composite and fire blocking an article with the nonwoven composite.

### 2. Description of Related Art

The State of California has led the drive to regulate and reduce the flammability of mattresses and mattress sets in an attempt to reduce the number of lives lost in household, hotel, and institutional fires. In particular, the Bureau of Home Furnishings and Thermal Insulation of the Department of Consumer Affairs of the State of California issued Technical Bulletin 603 "Requirements and Test Procedure for Resistance of a Residential Mattress/Box Spring Set to a Large Open-Flame" to quantify the flammability performance of mattress sets.

Mattresses normally contain a mattress core covered by cushioning material or batting that is in turn covered with an outer fabric ticking. Most cushioning material or batting is made from foam or fiber materials that will burn when exposed to an open flame. One useful method of fire blocking foam cushions, particularly airplane seats, is disclosed in United States Patent No. 4,750,443 to Blaustein, et al., wherein three to seven layers of flame resistant fabrics are used underneath the covering fabric of the seat to encase the foam. To the degree required per the aircraft seat flammability test method, these fire-blocked cushions withstand a flame jet impinging on the cushion and prevent the entire cushion from being engulfed by the flame or continuing to burn after the flame jet is removed. When applied to mattresses, the use of multiple fire blocking layers underneath the ticking can add stiffness or restrain the give of the mattress core, affecting overall comfort.

In addition, many fibers that are resistant to flame have a natural coloring based on their chemical structure. For example, fibers such as para-aramid fibers are very useful in flame retardant fabrics and these fibers have a natural gold color that is present in fabrics made from substantial amounts of those fibers. However, it is undesirable for the natural gold color of the para-aramid fabric to show through the outer ticking of mattresses, which are normally of a white or light or off-white color, or to show through the outer upholstery covering fabric of furniture. What is needed is a flexible fabric that incorporates a heat resistant fiber into a flame barrier wherein the color of that heat resistant fiber is masked by other fibers in the flame barrier, which still meeting important flame resistant requirements of the enduse.

PCT Publication WO 03/023108 discloses a nonwoven high loft flame barrier for use in mattresses and upholstered furniture. These barriers have very low density, ranging from 5 to 50 kilograms per cubic meter, most preferably 7.5 kilograms per cubic meter. The preferred nonwoven high loft flame barrier comprises a blend of fibers including fibers that are inherently fire resistant and resistant to shrinkage by direct flame, and fibers from polymers made with halogenated monomers. These barriers are designed to have bulk and cushioning, having as their major use as cushioning in the top and bottom panels of a mattress rather than as a flexible, strong fabric that can be used in both the panels and borders in many different articles, including mattresses, foundations (such as box springs) and other furniture that either does not require cushioning or where cushioning is provided by the use of very inexpensive thermoplastic fiber batts and foams.

United States Patent Nos. 6,132,476; 6,547,835, and 5,609,950 disclose fabric blends of inherently flame resistant fibers and cellulosic fibers having increased flame resistance; the fabric can contain an additional fire retardant that is added, for example, as an additive in a dyeing step. Because of the low content of inorganic material the flame resistant cellulose fiber disclosed in these references does not retain an adequate percentage of its weight when exposed to high temperatures.

United States Patent No. 4,970,111 discloses a fire resistant nonwoven fabric or fabric structure comprising a synergistic blend of about 35 to 80% by weight of chlorine-containing polymeric fibers, about 2 to 25% by weight of non-fusing fibers and about 10 to 55% by weight of a fire retarding polyester binder. The non-fusing fibers preferably comprise fibers selected from the group consisting of oxidized polyacrylonitrile fibers, fiberglass, aramid (KEVLAR®, NOMEX®) and polybenzamidazole (PBI). These fabrics can be a single layer or multiple layers and are fusion bonded, requiring a binder to hold the structure together. The addition of a binder increases the chance the fabric will be "board-like" and have unacceptable flexibility.

United States Patent No. 6,596,658 discloses a flame resistant nonwoven fabric laminate having a three-dimensional image formed therein by a three-dimensional image transfer device and treated with a fire retardant binder to stabilize the three-dimensional image and provide the laminate with flame retardant characteristics. The nonwoven fabric laminate comprises a first layer formed of a dimensionally stable, heat-resistant entangled fibers such as NOMEX® fibers, the first layer having a basis weight of from about 1.0 to 3.0 ounces per square yard (34 to 102 grams per square meter), a second spunbonded support layer bonded by entanglement to the first layer, the second layer having a basis weight from about 2.0 to 5.0 ounces per square yard (68 to 170 grams per squares meter).

### SUMMARY OF THE INVENTION

This invention relates to a multilayer nonwoven composite useful to fire block articles, and a fire blocked article or mattress containing the composite. The multilayer nonwoven composite comprises a first layer comprising 75 to 25 weight percent regenerated cellulosic fiber that retains at least 10 percent of its fiber weight when heated in air to 700°C at a rate of 20 degrees C per minute and 25 to 75 weight percent heat-resistant fiber, said first layer having a basis weight of from 1 to 5 ounces per square yard (34 to 170 grams per square meter); and a second layer comprising up to 75 weight percent of a regenerated cellulosic fiber that retains at least 10 percent of its fiber weight when heated in air to 700°C at a rate of 20 degrees C per minute, and 25 to 100 weight percent of a modacrylic fiber, said second layer having a basis weight of from 1 to 5 ounces per square yard (34 to 170 grams per square meter), the nonwoven composite having a total basis weight of from 2 to 7 ounces per square yard (68 to 237 grams per square meter).

This invention also relates to a method making a nonwoven composite useful in fire blocking, comprising the steps of:
a) combining a first layer and a second layer of staple fibers, the first layer of staple fibers comprising 75 to 25 weight percent regenerated cellulosic fiber that retains at least 10 percent of its fiber weight when heated in air to 700°C at a rate of 20 degrees C per minute and 25 to 75 weight percent heat-resistant fiber, and the second layer of staple fibers comprising up to 75 weight percent regenerated cellulosic fiber that retains at least 10 percent of its fiber weight when heated in air to 700°C at a rate of 20 degrees C per minute and 25 to 100 weight percent modacrylic fiber; and
b) hydrolacing the first and second layers together to consolidate the layers and form a unitary nonwoven composite.

This invention further relates to a method of fire blocking an article, comprising the steps of
a) combining a layer of nonwoven fire blocking composite, a fabric ticking or upholstery layer, and optionally a cushioning layer,
b) sewing the layers together to form a fire blocked quilt or upholstery fabric, and
c) incorporating the fire blocked quilt or upholstery fabric into the article,
the nonwoven fire blocking composite comprising a first layer of staple fiber comprising 75 to 25 weight percent regenerated cellulosic fiber that retains at least 10 percent of its fiber weight when heated in air to 700°C at a rate of 20 degrees C per minute and 25 to 75 weight percent heat-resistant fiber, said first layer having a basis weight of from 1 to 5 ounces per square yard (34 to 170 grams per square meter); and a second layer of staple fibers comprising up to 75 weight percent regenerated cellulosic fiber that retains at least 10 percent of its fiber weight when heated in air to 700°C at a rate of 20 degrees C per minute, and 25 to 100 weight percent modacrylic fiber, said second layer having a basis weight of from 1 to 5 ounces per square yard (34 to 170 grams per square meter), the nonwoven composite having a total basis weight of from 2 to 7 ounces per square yard (68 to 237 grams per square meter).

The invention also relates to a multilayer nonwoven composite useful to fire block articles, comprising a first layer comprising regenerated cellulosic fiber that retains at least 10 percent of its fiber weight when heated in air to 700°C at a rate of 20 degrees C per minute and heat-resistant fiber, and a second layer comprising either regenerated cellulosic fiber that retains at least 10 percent of its fiber weight when heated in air to 700°C at a rate of 20 degrees C per minute and/or modacrylic fiber, the nonwoven composite having a total basis weight of from 2 to 7 ounces per square yard (68 to 237 grams per square meter) and a thickness of less than 75 mils, the multilayer nonwoven composite providing adequate fire blocking to an article unable to pass California Test Bulletin 603 to enable that article to pass California Test Bulletin 603 without addition of a chemical flame retardant material.

### DETAILS OF THE INVENTION

This invention relates to a multilayer nonwoven composite useful to fire block articles that not only performs in severe mattress burning tests but is also thin and flexible so as to not detract from the comfort and feel of typical mattresses. Such nonwoven composites preferably have a total basis weight of from 2 to 7 ounces per square yard (68 to 237 grams per square meter) and have a thickness in the range of about 15 to 75 mils (0.4 to 1.9 mm). The composites preferably have two layers of fibers made from two different intimate blends of staple fibers; the two layers are superposed or laid one on the other and are consolidated together, preferably by spunlacing with water jets, to form a unitary non-patterned composite structure. The staple fibers used in the composite of this invention have cut lengths in the range of 0.4 to 2.5 inches (1 to 6.3 cm) preferably 0.75 to 2 inches (1.9 to 5.1 cm).

The first layer of the nonwoven composite of this invention contains 75 to 25 weight percent of a regenerated cellulosic fiber that retains at least 10 percent of its fiber weight when heated in air to 700°C at a rate of 20 degrees C per minute and 25 to 75 weight percent of a heat-resistant fiber. The intimate blend of two fibers work together to form a base layer for the multilayer nonwoven composite, the regenerated cellulosic fiber generating a char layer when burned, while the heat-resistant fiber provides strength in flame to inhibit and/or reduce the break open of the layer.

Th e regenerated cellulose fibers used in the composite of this invention preferably have 10 percent inorganic compounds incorporated into the fibers and are said to be char forming. Such fibers, and methods for making such fibers, are generally disclosed in United States Patent No. 3,565,749 and British Patent No. 1,064,271. A preferred char-forming cellulose fiber for this invention is a viscose fiber containing silicon dioxide in the form of a polysilicic acid with aluminum silicate sites. Such fibers, and methods for making such fibers are generally disclosed in U.S. Pat. No. 5,417,752 and PCT Pat. Appl. WO 9217629. Viscose fiber containing silicic acid and having approximately 31 (+/- 3) percent inorganic material is sold under the trademark Visil® by Sateri Oy Company of Finland.

The other critical component in the first layer of the composite of this invention is heat resistant fiber. By "heat resistant" it is meant that the fiber preferably retains 90 percent of its fiber weight when heated in air to 500°C at a rate of 20 degrees C per minute. Such fiber is normally flame resistant, meaning the fiber or a fabric made from the fiber has a Limiting Oxygen Index (LOI) such that the fiber or fabric will not support a flame in air, the preferred LOI range being greater than 26. The preferred fibers do not excessively shrink when exposed to a flame, that is, the length of the fiber will not significantly shorten when exposed to flame. Fabrics containing 0.5 ounces per square yard (17 grams per square meter) of an organic fiber that retains 90 percent of its fiber weight when heated in air to 500°C at a rate of 20 degrees C per minute tend to have limited amount of cracks and openings when burned by an impinging flame, which is important to the fabrics performance as a fire blocker.

Heat resistant and stable fibers useful in the nonwoven fire-blocking fabric of this invention include fiber made from para-aramid, polybenzazole, polybenzimidazole, and polyimide polymer. The preferred heat resistant fiber is made from aramid polymer, especially para-aramid polymer.

As used herein, "aramid" is meant a polyamide wherein at least 85% of the amide (-CONH-) linkages are attached directly to two aromatic rings. Additives can be used with the aramid. In fact, it has been found that up to as much as 10 percent, by weight, of other polymeric material can be blended with the aramid or that copolymers can be used having as much as 10 percent of other diamine substituted for the diamine of the aramid or as much as 10 percent of other diacid chloride substituted for the diacid chloride of the aramid. In the practice of this invention, the preferred para-aramid is poly(paraphenylene terephthalamide). Methods for making para-aramid fibers useful in this invention are generally disclosed in, for example, U.S. Patent Nos. 3,869,430; 3,869,429; and 3,767,756. Such aromatic polyamide organic fibers and various forms of these fibers are available from DuPont Company, Wilmington, Delaware under the trademark Kevlar® fibers.

Commercially available polybenzazole fibers useful in this invention include Zylon® PBO-AS (Poly(p-phenylene-2,6-benzobisoxazole) fiber, Zylon® PBO-HM (Poly(p-phenylene-2,6-benzobisoxazole)) fiber, available from Toyobo, Japan. Commercially available polybenzimidazole fibers useful in this invention include PBI® fiber available from Celanese Acetate LLC. Commercially available polyimide fibers useful in this invention include P-84® fiber available from LaPlace Chemical.

The first layer of the nonwoven composite of this invention contains 75 to 25 weight percent of the regenerated cellulosic fiber and 25 to 75 weight percent of the heat-resistant fiber, based on the total amount of these fibers in the layer. At least 25 weight percent of the heat resistant fiber is desired to achieve robust fire blocking performance of the nonwoven composite. At least 25 weight percent of the regenerated cellulosic fiber is desired to provide adequate char in the first layer of the nonwoven composite. The first layer preferably contains 55 to 45 weight percent of the regenerated cellulosic fiber and 45 to 55 weight percent of the heat-resistant fiber, based on the total amount of these fibers in the layer.

The second layer of the nonwoven composite of this invention comprises up to 75 weight percent of a regenerated cellulosic fiber that retains at least 10 percent of its fiber weight when heated in air to 700°C at a rate of 20 degrees C per minute, and 25 to 100 weight percent of a modacrylic fiber. The fibers comprising the second layer are generally white or off-white and the second layer provides color shielding for the base layer and provides additional char material to the nonwoven composite if the regenerated cellulose is present.

Modacrylic fiber is used in the second layer of the nonwoven fire-blocking fabric composite of this invention because this fiber releases flame-suppressing halogen-containing gases when burned. By modacrylic fiber it is meant acrylic synthetic fiber made from a polymer comprising primarily acrylonitrile. Preferably the polymer is a copolymer comprising 30 to 70 weight percent of an acrylonitrile and 70 to 30 weight percent of a halogen-containing vinyl monomer. The halogen-containing vinyl monomer is at least one monomer selected, for example, from vinyl chloride, vinylidene chloride, vinyl bromide, vinylidene bromide, etc. Examples of copolymerizable vinyl monomers are acrylic acid, methacrylic acid, salts or esters of such acids, acyrlamide, methylacrylamide, vinyl acetate, etc.

The preferred modacrylic fibers of this invention are copolymers of acrylonitrile combined with vinylidene chloride, the copolymer having in addition an antimony oxide or antimony oxides for improved fire retardancy. Such useful modacrylic fibers include, but are not limited to, fibers disclosed in United States Patent No. 3,193,602 having 2 weight percent antimony trioxide, fibers disclosed in United States Patent No. 3,748,302 made with various antimony oxides that are present in an amount of at least 2 weight percent and preferably not greater than 8 weight percent, and fibers disclosed in United States Patent Nos. 5,208,105 and 5,506,042 having 8 to 40 weight percent of an antimony compound.

The preferred modacrylic fiber is commercially available Protex C from Kaneka Corporation, Japan, which is said to contain 10 to 15 weight antimony oxides, although fibers having less antimony oxide, in the range of 6 weight percent or less, can also be used. The second layer of the nonwoven composite of this invention contains up to 75 weight percent of a regenerated cellulosic fiber and 25 to 100 weight percent of a modacrylic fiber, based on the total amount of those fibers in the layer. The regenerated cellulosic fiber provides the layer with char when the composite is burned, and at least 25 weight percent of the modacrylic fiber is needed to provide the desired flame-suppressing chlorine-containing gases, when the composite is burned. The second layer preferably contains 25 to 40 weight percent of the regenerated cellulosic fiber and 75 to 60 weight percent of the modacrylic fiber, based on the total amount of those fibers in the layer.

Each of the first and second layers of the multilayer nonwoven composite of this invention can have a basis weight ranging from 1 to 5 ounces per square yard (34 to 170 grams per square meter) as long as the total basis weight of the composite is in the range of from 2 to 7 ounces per square yard (68 to 237 grams per square meter). Preferably, each of the first and second layers of the multilayer nonwoven composite has a basis weight ranging from 1.25 to 2.5 ounces per square yard (42 to 85 grams per square meter).

The multilayer nonwoven fabric composite of this invention is preferably a flexible fabric because of its intended use in articles such as mattresses and furniture. Stiff or "board-like" fabrics would impart undesirable stiffness to such articles. The "hand" or flexibility of a fabric composite in various directions can be measured using a Handle-O-Meter, resulting in a "Total Hand" measurement of the fabric. To insure the nonwoven fabric composites of this invention are flexible they preferably have a Total Hand measurement of less that 500 grams-force.

The multilayer nonwoven fabric composite of this invention preferably functions as a fire blocker without the addition of topical fire retardant chemical materials. It is believed the fire blocking performance of such composites can be predicted by the fabric composite's performance in the Thermal Protective Performance (TPP) test. When measured, the multilayer nonwoven fabric composite of this invention preferably has a TPP rating greater than 9 calories per square centimeter.

The most preferred multilayer nonwoven composite of this invention has a first layer that comprises 55 to 45 weight percent of a regenerated cellulosic fiber containing silicic acid and 45 to 55 weight percent of a poly(paraphenylene terephthalamide) fiber, and a second layer that comprises 25 to 40 weight percent of a regenerated cellulosic fiber containing silicic acid and 75 to 60 weight percent of a modacrylic fiber.

The nonwoven composite of this invention can me made by combining a first layer and a second layer of staple fibers, the first layer of staple fibers comprising 75 to 25 weight percent regenerated cellulosic fiber that retains at least 10 percent of its fiber weight when heated in air to 700°C at a rate of 20 degrees C per minute and 25 to 75 weight percent heat-resistant fiber, and the second layer of staple fibers comprising up to 75 weight percent regenerated cellulosic fiber that retains at least 10 percent of its fiber weight when heated in air to 700°C at a rate of 20 degrees C per minute and 25 to 100 weight percent modacrylic fiber; and then hydrolacing the first and second layers together to consolidate the layers and form a unitary nonwoven composite.

The layers of the multilayer nonwoven composite of this invention can be made by conventional nonwoven sheet forming processes utilizing staple fibers, including processes for making carded webs, air-laid webs, and/or wet-laid webs. Preferably, the first and second layers are made by forming fiber webs using separate carding machines and laying first one web on a moving wire belt and then laying the second web on the first web to form the first and second unconsolidated layers having the compositions as described herein. Such formed webs are preferably consolidated into useable fabrics via processes commonly known as spunlacing or hydrolacing where high-pressure fluid jets are used to entangle the staple fibers into a useable fabric, however other processes that can generate a nonwoven sheet may be used. The web-formation and spunlacing processes disclosed in United States Patent Nos. 3,508,308; 3,493,462; 3,403,862; and 3,797,074 are examples of methods well-known in the art that are useful in the manufacture of the nonwoven fabric of this invention. The preferred nonwoven fabrics of this invention are made from carded webs of cut staple fibers that utilize pressurized water jets to entangle the fibers and consolidate the layers into a non-patterned cohesive sheet.

This invention further relates to a method of fire blocking an article, comprising the steps of (1) combining a layer of nonwoven fire blocking composite, a fabric ticking or upholstery layer, and optionally a cushioning layer; (2) sewing the layers together to form a fire blocked quilt or upholstery fabric, and (3) incorporating the fire blocked quilt or upholstery fabric into the article. The nonwoven fire blocking composite comprises a first layer of staple fiber comprising 75 to 25 weight percent regenerated cellulosic fiber that retains at least 10 percent of its fiber weight when heated in air to 700°C at a rate of 20 degrees C per minute and 25 to 75 weight percent heat-resistant fiber, and a second layer of staple fibers comprising up to 75 weight percent regenerated cellulosic fiber that retains at least 10 percent of its fiber weight when heated in air to 700°C at a rate of 20 degrees C per minute, and 25 to 100 weight percent modacrylic fiber. Both first and second layers have a basis weight of from 1 to 5 ounces per square yard (34 to 170 grams per square meter), and the total nonwoven composite has a basis weight of from 2 to 7 ounces per square yard (68 to 237 grams per square meter).

Preferably, the multilayer nonwoven composite of this invention is positioned in the article such that the second layer of the nonwoven composite, which is preferably white, offwhite, or light in color is closer to or faces the exterior of the article, and the first layer of the nonwoven is closer to or faces the interior of the article. In other words, the multilayer nonwoven composite is preferably positioned in the article such that the second layer visually masks the color of the first layer.

The combination of nonwoven fire blocking composite, fabric ticking or upholstery layer, and optionally a cushioning layer, are sewn or stitched together to form a pre-stitched quilt and these quilts can have many forms. A basic example of a quilt comprises, in order, an outer fabric ticking or cover fabric layer, one or more layers of the multilayer nonwoven composite fire blocker of this invention, a cushioning layer of foam or fiber batting, and a stitch-backing layer. The layers are combined and then stitched together using any common stitch pattern, typically a quilting pattern, to form a quilt that is used in the mattress borders and panels as needed.

Fabrics useful as the outer fabric ticking or cover fabric layer are normally very durable woven or knit fabrics utilizing any number of weaves, and tend to have basis weights in the range of 2 to 8 ounces per square yard (68 to 271 grams per square meter). Ticking fabrics may contain but are not limited to cotton, polyester fibers, polypropylene fibers, or rayon fibers.

The optional cushioning layer of foam or fiber batting may include one or more light density fibrous batting or foams, or a combination thereof that provides the desired surface effect or cushion. The batting and/or foams acts like a pillow underneath the ticking, providing very tactile cushioning, the type that can be readily discerned by simply touching or running one's hand across the mattress. The preferred fibrous batting material is polyester (PET) batting and is typically present in an amount of about 0.5 to 2.0 ounces per square foot (153 to 610 grams/square meter). While not intended to be limiting, of the cushioning material is a fibrous batting, such batting may include a vertically pleated structure such as disclosed in, for example, in PCT Publication WO 2003049581 or a batting of fibers such as disclosed for example in U.S. Pat. No. 3,118,750. If foam is used, it is commonly polyurethane or latex foam and is typically 0.5 to 3 inches (1.2 to 7.6 cm) thick.

The stitch-backing layer is typically used to hold the stitch on the side of the quilt opposite the ticking when the cushioning material is not substantial enough to hold a stitch. Typically, stitch-backing layers are lightweight fabrics having a basis weight in the range of 0.5 ounces per square yard (17 grams per square meter) and are made from materials such as polypropylene.

An alternative quilt layer configuration can be, in order, an outer ticking or upholstery layer, a layer of cushioning material, and one or more layers of the multilayer nonwoven composite fire blocker, wherein the cushioning material is sandwiched between the fire blocker and the ticking. In this quilt, no stitch backing is needed because the fire blocker serves the purpose of holding the stitch. Another version of the quilt can be made with multiple layers of cushioning material. For example, a quilt can be formed by combining, in order, outer ticking or upholstery fabric, a layer of cushioning material, one or more layers of the multilayer nonwoven composite fire blocker, another layer of cushioning material, and then a stitch-backing layer.

Another possible quilt configuration is one in which one layer of the multilayer nonwoven composite fire blocker of this invention is placed directly under the outer cover fabric, followed by a cushioning layer, with a second layer of the multilayer nonwoven composite fire blocker under the cushioning layer. In this configuration the last layer of the multilayer nonwoven composite fire blocker also functions as a stitch backing. In an alternative version of this particular quilt configuration, another layer of cushioning can be disposed between the cover fabric and the multilayer nonwoven composite fire blocker.

Still another quilt configuration could be comprised of an outer ticking or upholstery layer and one or more layers of the multilayer nonwoven composite fire blocker of this invention, with no substantial cushioning layer. As one can see, many different quilts are possible and other layers of materials can be combined in the quilts as long as the fire-blocking performance of the quilt is not adversely affected.

The pre-stitched quilts may then be incorporated into an article such as a piece of furniture, or preferably, a mattress and foundation set. One method of fire blocking the mattress is by fully covering the panels and borders of the mattress core with the pre-stitched quilts, and sewing the quilts together at the seams to encapsulate the mattress. This insures the mattress will be fire blocked regardless of which panel or border is exposed to the flame. Pre-stitched quilts of various types can be incorporated into an article, such as a quilt having little cushioning can be used in the border of a mattress while a quilt having a considerable amount of cushioning can be used in the top and bottom panels of the same mattress. Foundations, such as box springs, do not normally have to be completely fire blocked but generally are only required to have fire blocking on the borders with fire blocking being optional for the top face or panel of the foundation. This foundation panel is normally in contact with the mattress and is thus generally shielded from flame so the material used in the foundation panel does not typically have to have the same degree of fire blocking as the panel of the mattress. Further, the mattress foundation may not have a large degree of cushioning material in the border and/or the panel. However, the multilayer nonwoven composite of this invention can be used in either the foundation border or panel as desired.

The invention also relates to a multilayer nonwoven composite useful to fire block articles, and an article comprising the composite, the multilayer nonwoven composite comprising a first layer comprising regenerated cellulosic fiber that retains at least 10 percent of its fiber weight when heated in air to 700°C at a rate of 20 degrees C per minute and heat-resistant fiber, and a second layer comprising either regenerated cellulosic fiber that retains at least 10 percent of its fiber weight when heated in air to 700°C at a rate of 20 degrees C per minute and/or modacrylic fiber, the nonwoven composite having a total basis weight of from 2 to 7 ounces per square yard (68 to 237 grams per square meter) and a thickness of less than 75 mils (1.9 mm), the multilayer nonwoven composite providing adequate fire blocking to an article unable to pass California Technical Bulletin 603 issued July 2003, to enable that article to pass California Technical Bulletin 603 issued July 2003 without addition of a chemical flame retardant material. The multilayer nonwoven composite can be incorporated into the article, such as a mattress, in any manner that allows that mattress to past the test when it would otherwise not pass.

### TEST METHODS

### Mattress Burn Performance

The Bureau of Home Furnishings and Thermal Insulation of the Department of Consumer Affairs of the State of California (3485 Orange Grove Avenue, North Highlands, California 95660-5595, USA) published Technical Bulletin 603 "Requirements and Test Procedure for Resistance of a Residential Mattress/Box Spring Set to a Large Open-Flame" dated February 2003 to quantify the flammability performance of mattress sets. The bulletin was later revised in July 2003, requiring the limit of Peak Heat Release Rate (PHRR) to be less than 200 kilowatts and the Total Heat release limit at 10 minutes to be less than 25 megajoules. This protocol provides a means of determining the burning behavior of mattress/foundation sets by measuring specific fire test responses when the mattress plus foundation are exposed to a specified flaming ignition source under well-ventilated conditions. It is based on the National Institute of Standards and Technology Publication titled "Protocol of Testing Mattress/Foundation Sets Using a Pair of Gas Burners" dated February 2003.

Test data are obtained that describe the burning during and subsequent to the application of a specific pair of gas burners from the point of ignition until (1) all burning of the sleep set has stopped, (2) a period of 30 minutes has elapsed, or (3) flashover of the test room appears inevitable. The rate of heat release from the burning test specimen (the energy generated by the fire) is measured by oxygen consumption calorimetry. A discussion of the principles, limitations, and requisite instrumentation are found in ASTM E 1590 "Standard Test Method of Fire Testing of Mattresses". Terminology associated with the testing is defined in ASTM E 176 "Standard Terminology of Fire Standards".

In general, the test protocol utilizes a pair of propane burners, designed to mimic the heat flux levels and durations imposed on a mattress and foundation by burning bedclothes. The burners impose differing fluxes for differing times on the mattress top and the side of the mattress/foundation. During and subsequent to this exposure, measurements are made of the time-dependent heat release rate from the test specimen.

The mattress/foundation is placed on top of a short bed frame that sits on a catch surface. During the testing, the smoke plume is caught by a hood that is instrumented to measure heat release rate. For practicality, twin-sized mattresses and foundations are tested. After ignition by the burners, the specimen is allowed to burn freely under well-ventilated conditions.

The test specimen includes a mattress that is placed on foundation with T-shaped burners set to burn the specimen. One burner impinges flames on the top surface of the mattress and is set 39 mm from the surface of the mattress. The second burner impinges flames vertically on the side of the mattress/foundation combination and is set 42 mm from the side of the specimen. The side burner and the top burner are not set at the same place along the length of the specimen but are offset from on another along the length approximately 18 to 20 cm. The burners are specially constructed and aligned per the test method.

The test specimen is conditioned for 24 hours prior to the testing at an ambient temperature of above 12 Celsius (54 Fahrenheit) and a relative humidity of less than 70 percent. The test specimen of mattress and foundation is centered on each other and the frame and catch surface. If the mattress is 1 to 2 cm narrower than the foundation the mattress may be shifted until the sides of the mattress and foundation are aligned vertically. The burners are aligned and spaced from the specimen per the standard. Data recording and logging devices are turned on at least one minute prior to ignition. The burners are ignited and the top burner is allowed to burn for 70 seconds while the side burner is allowed to burn for 50 seconds (if possible) and then they are removed from the area. Data collection continues until all signs of burning and smoldering have ceased or until one hour has elapsed.

### ThermoGravametric Analysis

The fibers used in this invention retain a portion of their fiber weight when heated to high temperature at a specific heating rate. This fiber weight was measured using a Model 2950 Thermogravimetric Analyzer (TGA) available from TA Instruments (a division of Waters Corporation) of Newark, Delaware. The TGA gives a scan of sample weight loss versus increasing temperature. Using the TA Universal Analysis program, percent weight loss can be measured at any recorded temperature. The program profile consists of equilibrating the sample at 50 degrees C; ramping the temperature at from 10 or 20 degrees C per minute from 50 to 1000 degrees C; using air as the gas, supplied at 10 ml/minute; and using a 500 microliter ceramic cup (PN 952018.910) sample container.

The testing procedure is as follows. The TGA was programmed using the TGA screen on the TA Systems 2900 Controller. The sample ID was entered and the planned temperature ramp program of 20 degrees per minute selected. The empty sample cup was tared using the tare function of the instrument. The fiber sample was cut into approximately 1/16" (0.16 cm) lengths and the sample pan was loosely filled with the sample. The sample weight should be in the range of 10 to 50 mg. The TGA has a balance therefore the exact weight does not have to be determined beforehand. None of the sample should be outside the pan. The filled sample pan was loaded onto the balance wire making sure the thermocouple is close to the top edge of the pan but not touching it. The furnace is raised over the pan and the TGA is started. Once the program is complete, the TGA will automatically lower the furnace, remove the sample pan, and go into a cool down mode. The TA Systems 2900 Universal Analysis program is then used to analyze and produce the TGA scan for percent weight loss over the range of temperatures.

### Thermal Protective Performance Test (TPP)

The predicted protective performance of the multilayer nonwoven composite of this invention in heat and flame was measured using the "Thermal Protective Performance Test" NFPA 2112. A combined radiant and convective heat source is directed at a section of nonwoven composite (the test specimen) mounted in a horizontal position at a specified heat flux (typically 2 cal/cm²/sec). The test measures the transmitted heat energy from the source through the specimen using a copper slug calorimeter with no space between the fabric and heat source. The test endpoint is characterized by the time required to attain a predicted second-degree skin burn injury using a simplified model developed by Stoll & Chianta, "Transactions New York Academy Science", 1971, 33 p 649. The value assigned to a specimen in this test, denoted as the TPP value, computed by multiplying the imposed heat flux times the test end-point time, is the total heat energy that the specimen can withstand before a second degree burn is expected. Higher TPP values denote better insulation performance.

### Total Hand

The Total Hand of each barrier was measured using INDA Standard Test IST 90.3(01); Standard Test Method for Handle-O-Meter Stiffness of Nonwoven Fabrics. The INDA standard utilizes the Handle-O-Meter apparatus to measure the force required to flex a nonwoven fabric sample into but not through a fixed width slot. This force is measured in the machine and cross directions on both sides of the fabric resulting in four force measurements. These four force measurements are then combined to the resulting Total Hand reported in force units.

### Thickness

Thickness results were based on ASTM D1777-96, Standard Test Method for Thickness of Textile Materials.

### Example 1

A multilayered spunlaced nonwoven fabric composite was prepared as follows. Two staple fiber blends were made from bales on 2 separately fed lines from 3 different fibers as follows. Blend A was 50/50 blend of Type 970 2.2 denier per filament (dpf) (2.4 dtex/filament) Kevlar® brand staple fiber having a 2" (5 cm) cut length and Type 33AP 1.5 dpf (1.7 dtex/filament) Visil® brand staple fiber having a 1.6" (4.1 cm) cut length. Blend B was a 67/33 blend of 1.5 dpf (1.7 dtex/filament) Protex C brand modacrylic staple fibers having a 1.6" (4.1 cm) cut length and Type 33AP 1.5 dpf (1.7 dtex/filament) Visil® brand staple fiber having a 1.6" (4.1 cm) cut length.

One opening and carding line prepared Blend A and laid a 2.5 oz./sq.yd. (85 grams/sq. meter) 96" (244 cm) wide web of the blend on a transfer belt creating Web A. At the same time, a second opening and carding line prepared Blend B and laid a 4.0 oz./sq. yd. (136 grams/sq. meter), 91" (231 cm) wide web of Blend B on top of Web A and both were carried on the belt into a Perfojet hydro-entangling machine. The webs were consolidated with hydrolacing water jets and a cohesive two-layer nonwoven composite was formed having a total basis weight of 6.5 ounces per square yard (220 grams per square meter) and a total hand measurement of 490 grams force. The nonwoven composite also had a TPP rating of 21 calories per square centimeter and a total thickness of 67 mils (1.7 mm).

This composite was then incorporated as a barrier layer in a double side tight mattress. A panel quilt for the top and bottom panels of the mattress was made by combining, in order, mosaic style polyester/polypropylene white woven ticking fabric; ¾" (1.9 cm) polyester batting; the two-layered nonwoven composite made above; 3 layers of 7/16" (1.1 cm) polyurethane foam; and polystitch backing fabric; the layers were then stitched together with non-FR thread.

A border quilt for the border of the mattress was made by combining, in order, mosaic style polyester/polypropylene white woven ticking fabric; the two-layered nonwoven composite made above; 3/16" (0.48 cm) polyurethane foam; and polystitch backing fabric; the layers were then stitched together with non-FR thread.

The mattress was then constructed having as internals gray felt insulator pad against 522 Highpro mattress springs; the gray felt insulator pad was then covered, in order, by 7/16" (1.1 cm) polyurethane foam and 1-1/2" (3.8 cm) convoluted polyurethane foam. The top and bottom of the mattress were then covered with the panel quilt and the borders were covered with the border quilt, with the seams sewn with FR polyester tapes and fire-resistant aramid thread.

The foundation was a box spring having the same border quilt as used for the mattress and having as a top panel a non-skid pad comprised of a lightweight polyester-type fabric. The foundation was assembled from a wooden frame with a stiff cardboard layer stapled to the frame, the cardboard forming the support for the top panel of the foundation. A 4 oz./sq. yard (136 grams/sq. meter) spunlaced fabric containing 25% Kevlar®/75% Visil® 33AP fiber was then stapled to the frame over the cardboard, overlapping the top edges and extending down the sides of the frame approximately 1 inch (2.5 cm). The border quilt and non-skid pad were sewn together with FR polyester tapes and fire-resistant aramid thread such that the side borders were long enough to overlap the top panel 2 inches (5 cm) in what is called a continental border. The quilt/non-skid pad combination was then slid over and secured to the frame with staples.

The mattress and foundation was burned as described in California Technical bulletin TB-603 as revised July 2003. The mattress easily passed the Peak Heat Release Rate limit (<200 KW) with a PHRR of < 50KW and the Total Heat release limit at 10 min. (<25 MJ) with a value of <10 MJ.

### Example 2

Multilayered spunlaced nonwoven fabric composites of various weights were made as in Example 1, having a 50/50 blend of Kevlar®/Visil® in the first layer and a 33/67 blend of Visil®/Modacrylic in the second layer. The composites were tested to determine their TPP rating, Total Hand measurement, and TB603 (as revised July 2003) Burn Test Results, which are summarized in the Table (data for the nonwoven composite of Example 1 is also included). TB603 Burn Tests were run on both single-sided and double-sided tight top mattresses. A number of mattresses were made and tested, all of which passed the TB603 (as revised July 2003) burn test.

**Table**

| Nominal Basis Weight | | | Total Thickness (mil)(mm) | Total Hand (gf) | TPP Rating cal/cm² | Density | Burn Test | |
|---|---|---|---|---|---|---|---|---|
| oz/yd² (g/m²) | | | | | | | Single Double | |
| 1st Layer | 2^{nd} Layer | Total | | | | g/cc² | Sided Sided | |
| | | | | | | | (No. Passed) | |
| 1.25(42) | 1.25(42) | 2.5(85) | 24(0.6) | 69 | 10 | 0.1 | 6 of 6 | 6 of 6 |
| 1.9(64) | 1.9(64) | 3.8(129) | 39 (1.0) | 286 | 12 | 0.1 | 3 of 3 | 3 of 3 |
| 2.25(76) | 2.25(76) | 4.5(153) | 49(1.2) | 319 | 15 | 0.1 | 3 of 3 | 3 of 3 |
| 2.5(85) | 2.5(85) | 5.0(170) | 63 (1.6) | 316 | 18 | 0.1 | 2 of 2 | --*-- |
| 2.5(85) | 4.0(135) | 6.5(220) | 67(1.7) | 490 | 21 | 0.1 | 2 of 2 | 2 of 2 |

| | | | | | | | | |
|---|---|---|---|---|---|---|---|---|
| * Mattress Not Made or Tested | | | | | | | | |

## Claims

1. A multilayer nonwoven composite useful to fire block articles, comprising:
a) a first layer comprising 75 to 25 weight percent regenerated cellulosic fiber that retains at least 10 percent of its fiber weight when heated in air to 700°C at a rate of 20 degrees C per minute and 25 to 75 weight percent heat-resistant fiber,
said first layer having a basis weight of from 1 to 5 ounces per square yard (34 to 170 grams per square meter); and
b) a second layer comprising up to 75 weight percent of a regenerated cellulosic fiber that retains at least 10 percent of its fiber weight when heated in air to 700°C at a rate of 20 degrees C per minute, and 25 to 100 weight percent of a modacrylic fiber, said second layer having a basis weight of from 1 to 5 ounces per square yard (34 to 170 grams per square meter);
the nonwoven composite having a total basis weight of from 2 to 7 ounces per square yard (68 to 237 grams per square meter).

2. The nonwoven composite of claim 1, wherein the composite has a total hand measurement of less than 500 grams force.

3. The nonwoven composite of claim 1 wherein the composite has a total thickness of less than 75 mils (1.9 mm).

4. The nonwoven composite of claim 1, wherein the first layer a) has a basis weight of from 1.25 to 2.5 ounces per square yard (42 to 85 grams per square meter).

5. The nonwoven composite of claim 1, wherein the second layer b) has a basis weight of from 1.25 to 2.5 ounces per square yard (42 to 85 grams per square meter).

6. The nonwoven composite of claim 1, wherein the heat-resistant fiber is a para-aramid fiber.

7. The nonwoven composite of claim 6, wherein first layer comprises 55 to 45 weight percent regenerated cellulosic fiber containing silicic acid and 45 to 55 weight percent poly(paraphenylene terephthalamide) fiber, and second layer comprises 25 to 40 weight percent regenerated cellulosic fiber containing silicic acid and 75 to 60 weight percent modacrylic fiber.

8. The nonwoven composite of claim 1, wherein the regenerated cellulosic fiber contains silicic acid.

9. The nonwoven composite of claim 1, wherein the composite has a TPP rating of greater than 9 calories per square centimeters.

10. A fire blocked article comprising the nonwoven composite of claim 1.

11. A fire blocked mattress comprising the nonwoven composite of claim 1.

12. A method making a nonwoven composite useful in fire blocking, comprising the steps of
a) combining a first layer and a second layer of staple fibers,
the first layer of staple fibers comprising 75 to 25 weight percent regenerated cellulosic fiber that retains at least 10 percent of its fiber weight when heated in air to 700°C at a rate of 20 degrees C per minute and 25 to 75 weight percent heat-resistant fiber, and
the second layer of staple fibers comprising up to 75 weight percent regenerated cellulosic fiber that retains at least 10 percent of its fiber weight when heated in air to 700°C at a rate of 20 degrees C per minute and 25 to 100 weight percent modacrylic fiber; and
b) hydrolacing the first and second layers together to consolidate the layers and form a unitary nonwoven composite.

13. The method of making a nonwoven composite of claim 12, wherein the first layer of staple fibers is superposed over the second layer of staple fibers prior to hydrolacing.

14. The method of making a nonwoven composite of claim 12, wherein the first and second layers are consolidated by hydrolacing such that the total hand measurement of the nonwoven composite is less than 500 grams force.

15. The method of making a nonwoven composite of claim 12, wherein the first layer of staple fibers has a basis weight of 1 to 5 ounces per square yard (34 to 170 grams per square meter).

16. The method of making a nonwoven composite of claim 12, wherein the second layer of staple fibers has a basis weight of 1 to 5 ounces per square yard (34 to 170 grams per square meter).

17. A method of fire blocking an article, comprising the steps of
a) combining a layer of nonwoven fire blocking composite, a fabric ticking or upholstery layer, and optionally a cushioning layer,
b) sewing the layers together to form a fire blocked quilt or upholstery fabric, and
c) incorporating the fire blocked quilt or upholstery fabric into the article,
the nonwoven fire blocking composite comprising a first layer of staple fibers comprising 75 to 25 weight percent regenerated cellulosic fiber that retains at least 10 percent of its fiber weight when heated in air to 700°C at a rate of 20 degrees C per minute and 25 to 75 weight percent heat-resistant fiber,
said first layer having a basis weight of from 1 to 5 ounces per square yard (34 to 170 grams per square meter); and
a second layer of staple fibers comprising up to 75 weight percent regenerated cellulosic fiber that retains at least 10 percent of its fiber weight when heated in air to 700°C at a rate of 20 degrees C per minute, and 25 to 100 weight percent modacrylic fiber,
said second layer having a basis weight of from 1 to 5 ounces per square yard (34 to 170 grams per square meter); the nonwoven composite having a total basis weight of from 2 to 7 ounces per square yard (68 to 237 grams per square meter).

18. The method of fire blocking an article of claim 17, wherein the heat-resistant fiber is a para-aramid fiber.

19. The method of fire blocking an article of claim 17, wherein first layer comprises 55 to 45 weight percent regenerated cellulosic fiber containing silicic acid and 45 to 55 weight percent poly(paraphenylene terephthalamide) fiber, and second layer comprises 25 to 40 weight percent regenerated cellulosic fiber containing silicic acid and 75 to 60 weight percent modacrylic fiber.

20. The method of fire blocking an article of claim 17, wherein the regenerated cellulosic fiber contains silicic acid.

21. A multilayer nonwoven composite useful to fire block articles, comprising:
a) a first layer comprising regenerated cellulosic fiber that retains at least 10 percent of its fiber weight when heated in air to 700°C at a rate of 20 degrees C per minute and heat-resistant fiber, and
b) a second layer comprising either regenerated cellulosic fiber that retains at least 10 percent of its fiber weight when heated in air to 700°C at a rate of 20 degrees C per minute and/or modacrylic fiber,
the nonwoven composite having a total basis weight of from 2 to 7 ounces per square yard (68 to 237 grams per square meter) and a thickness of less than 75 mils (1.9 mm),
said multilayer nonwoven composite providing adequate fire blocking to an article unable to pass California Technical Bulletin 603 issued July 2003 to enable that article to pass California Technical Bulletin 603 issued July 2003 without addition of a chemical flame retardant material.

22. The nonwoven composite of claim 21, wherein the composite has a total hand measurement of less than 500 grams force.

23. A fire blocked article comprising the nonwoven composite of claim 21.

24. A fire blocked mattress comprising the nonwoven composite of claim 21.

## Patentansprüche

1. Mehrschichtiger, für feuerhemmende Artikel verwendbarer Vliesverbundstoff, der aufweist:
a) eine erste Schicht mit 75 bis 25 Gew.-% Celluloseregeneratfaser, die bei Erhitzen in Luft auf 700°C mit einer Geschwindigkeit von 20°C pro Minute mindestens 10 Prozent ihres Fasergewichts behält, und 25 bis 75 Gew.-% hitzebeständiger Faser,
wobei die erste Schicht eine Flächenmasse von 34 bis 170 g/m² (1 bis 5 Unzen/yard²) aufweist, und
b) eine zweite Schicht mit bis zu 75 Gew.-% Celluloseregeneratfaser, die bei Erhitzen in Luft auf 700°C mit einer Geschwindigkeit von 20°C pro Minute mindestens 10 Prozent ihres Fasergewichts behält, und 25 bis 100 Gew.-% einer Modacrylfaser, wobei die zweite Schicht eine Flächenmasse von 34 bis 170 g/m² (1 bis 5 Unzen/yard²) aufweist;
wobei der Vliesverbundstoff eine Gesamtflächenmasse von 68 bis 237 g/m² (2 bis 7 Unzen/yard²) aufweist.

2. Vliesverbundstoff nach Anspruch 1, wobei der Verbundstoff eine Gesamtgriffigkeit von weniger als 500 g aufweist.

3. Vliesverbundstoff nach Anspruch 1, wobei der Verbundstoff eine Gesamtdicke von weniger als 1,9 mm (75 Mil) aufweist.

4. Vliesverbundstoff nach Anspruch 1, wobei die erste Schicht a) eine Flächenmasse von 42 bis 85 g/m² (1,25 bis 2,5 Unzen/yard²) aufweist.

5. Vliesverbundstoff nach Anspruch 1, wobei die zweite Schicht b) eine Flächenmasse von 42 bis 85 g/m² (1,25 bis 2,5 Unzen/yard²) aufweist.

6. Vliesverbundstoff nach Anspruch 1, wobei die hitzebeständige Faser eine para-Aramidfaser ist.

7. Vliesverbundstoff nach Anspruch 6, wobei die erste Schicht 55 bis 45 Gew.-% kieselsäurehaltige Celluloseregeneratfaser und 45 bis 55 Gew.-% Poly(paraphenylenterephthalamid)-Faser aufweist und die zweite Schicht 25 bis 40 Gew.-% kieselsäurehaltige Celluloseregeneratfaser und 75 bis 60 Gew.-% Modacrylfaser aufweist.

8. Vliesverbundstoff nach Anspruch 1, wobei die Celluloseregeneratfaser Kieselsäure enthält.

9. Vliesverbundstoff nach Anspruch 1, wobei der Verbundstoff einen Wärmeschutzleistungs-(TPP-) Index von mehr als 9 cal/cm² aufweist.

10. Feuergehemmter Artikel, der den Vliesverbundstoff nach Anspruch 1 aufweist.

11. Feuergehemmte Matratze, die den Vliesverbundstoff nach Anspruch 1 aufweist.

12. Verfahren zur Herstellung eines Vliesverbundstoffs, der bei der Feuerhemmung verwendbar ist, wobei das Verfahren die folgenden Schritte aufweist:
a) Kombinieren einer ersten Stapelfaserschicht und einer zweiten Stapelfaserschicht,
wobei die erste Stapelfaserschicht 75 bis 25 Gew.-% Celluloseregeneratfaser, die bei Erhitzen in Luft auf 700°C mit einer Geschwindigkeit von 20°C pro Minute mindestens 10 Prozent ihres Fasergewichts behält, und 25 bis 75 Gew.-% hitzebeständige Faser aufweist, und
die zweite Stapelfaserschicht bis zu 75 Gew.-% Celluloseregeneratfaser, die bei Erhitzen in Luft auf 700°C mit einer Geschwindigkeit von 20°C pro Minute mindestens 10 Prozent ihres Fasergewichts behält, und 25 bis 100 Gew.-% Modacrylfaser aufweist; und
b) gemeinsames Wasserstrahlverwirbeln der ersten und der zweiten Schicht, um die Schichten zu verfestigen und einen einheitlichen Vliesverbundstoff zu bilden.

13. Verfahren zur Herstellung eines Vliesverbundstoffs nach Anspruch 12, wobei die erste Stapelfaserschicht vor dem Wasserstrahlverwirbeln der zweiten Stapelfaserschicht überlagert wird.

14. Verfahren zur Herstellung eines Vliesverbundstoffs nach Anspruch 12, wobei die erste und zweite Schicht durch Wasserstrahlverwirbeln so verfestigt werden, daß die Gesamtgriffigkeit des Vliesverbundstoffs weniger als 500 g beträgt.

15. Verfahren zur Herstellung eines Vliesverbundstoffs nach Anspruch 12, wobei die erste Stapelfaserschicht eine Flächenmasse von 34 bis 170 g/m² (1 bis 5 Unzen/yard²) aufweist.

16. Verfahren zur Herstellung eines Vliesverbundstoffs nach Anspruch 12, wobei die zweite Stapelfaserschicht eine Flächenmasse von 34 bis 170 g/m² (1 bis 5 Unzen/yard²) aufweist.

17. Verfahren zur feuerhemmenden Ausstattung eines Artikels, mit den folgenden Schritten:
a) Kombinieren einer Schicht aus feuerhemmendem Vliesverbundstoff, einer Gewebeüberzug- oder Polstermaterialschicht oder wahlweise einer Polsterungsschicht,
b) Zusammennähen der Schichten, um einen feuergehemmtes Stepp- oder Polsterstoff zu formen, und
c) Vereinigen des feuergehemmten Stepp- oder Polsterstoffs zu dem Artikel,
wobei der feuerhemmende Vliesverbundstoff eine erste Stapelfaserschicht mit 75 bis 25 Gew.-% Celluloseregeneratfaser, die bei Erhitzen in Luft auf 700°C mit einer Geschwindigkeit von 20°C pro Minute mindestens 10 Prozent ihres Fasergewichts behält, und 25 bis 75 Gew.-% hitzebeständige Faser aufweist,
wobei die erste Schicht eine Flächenmasse von 34 bis 170 g/m² (1 bis 5 Unzen/yard²) aufweist; und
eine zweite Stapelfaserschicht mit bis zu 75 Gew.-% Celluloseregeneratfaser, die bei Erhitzen in Luft auf 700°C mit einer Geschwindigkeit von 20°C pro Minute mindestens 10 Prozent ihres Fasergewichts behält, und 25 bis 100 Gew.-% Modacrylfaser aufweist,
wobei die zweite Schicht eine Flächenmasse von 34 bis 170 g/m² (1 bis 5 Unzen/yard²) aufweist; wobei der Vliesverbundstoff einer Gesamtflächenmasse von 68 bis 237 g/m² (2 bis 7 Unzen/yard²) aufweist.

18. Verfahren zur feuerhemmenden Ausstattung eines Artikels nach Anspruch 17, wobei die hitzebeständige Faser eine para-Aramidfaser ist.

19. Verfahren zur feuerhemmenden Ausstattung eines Artikels nach Anspruch 17, wobei die erste Schicht 55 bis 45 Gew.-% kieselsäurehaltige Celluloseregeneratfaser und 45 bis 55 Gew.-% Poly(paraphenylenterephthalamid)-Faser aufweist, und wobei die zweite Schicht 25 bis 40 Gew.-% kieselsäurehaltige Celluloseregeneratfaser und 75 bis 60 Gew.-% Modacrylfaser aufweist.

20. Verfahren zur feuerhemmenden Ausstattung eines Artikels nach Anspruch 17, wobei die Celluloseregeneratfaser Kieselsäure enthält.

21. Mehrschichtiger, für feuerhemmende Artikel verwendbarer Vliesverbundstoff, der aufweist:
a) eine erste Schicht mit Celluloseregeneratfaser, die bei Erhitzen in Luft auf 700°C mit einer Geschwindigkeit von 20°C pro Minute mindestens 10 Prozent ihres Fasergewichts behält, und hitzebeständiger Faser, und
b) eine zweite Schicht, die entweder Celluloseregeneratfaser, die bei Erhitzen in Luft auf 700°C mit einer Geschwindigkeit von 20°C pro Minute mindestens 10 Prozent ihres Fasergewichts behält, und/oder Modacrylfaser aufweist;
wobei der Vliesverbundstoff eine Gesamtflächenmasse von 68 bis 237 g/m² (2 bis 7 Unzen/yard²) und eine Dicke von weniger als 1,9 mm (75 Mil) aufweist;
wobei der mehrschichtige Vliesverbundstoff einem Artikel, der den Bestimmungen des California Technical Bulletin 603, Ausgabe Juli 2003, nicht genügt, feuerhemmende Eigenschaften verleiht, damit der Artikel den Bestimmungen des California Technical Bulletin 603, Ausgabe Juli 2003, ohne Zusatz eines chemischen feuerhemmenden Materials genügen kann.

22. Verbundstoff nach Anspruch 21, wobei der Verbundstoff eine Gesamtgriffigkeit von weniger als 500 g aufweist.

23. Feuergehemmter Artikel, der den Vliesverbundstoff nach Anspruch 21 aufweist.

24. Feuergehemmte Matratze, die den Vliesverbundstoff nach Anspruch 21 aufweist.

## Revendications

1. Composite non-tissé multicouche utile pour des articles résistant au feu, comprenant:
a) une première couche comprenant 75 à 25 pour cent en poids de fibre cellulosique régénérée qui conserve au moins 10 pour cent de son poids de fibre lorsque chauffée dans l'air à 700°C à une vitesse de 20 degrés C par minute et 25 à 75 pour cent en poids de fibre résistant à la chaleur,
ladite première couche ayant un poids de base de 1 à 5 once(s) par yard carré (34 à 170 grammes par mètre carré); et
b) une seconde couche comprenant jusqu'à 75 pour cent en poids d'une fibre cellulosique régénérée qui conserve au moins 10 pour cent de son poids de fibre lorsque chauffée dans l'air à 700°C à une vitesse de 20 degrés C par minute, et 25 à 100 pour cent en poids d'une fibre de type modacrylique, ladite seconde couche ayant un poids de base de 1 à 5 once(s) par yard carré (34 à 170 grammes par mètre carré);
le composite non-tissé ayant un poids total de base de 2 à 7 onces par yard carré (68 à 237 grammes par mètre carré).

2. Composite non-tissé selon la revendication 1, dans lequel le composite a une mesure totale de main de moins de 500 grams-force.

3. Composite non-tissé selon la revendication 1, dans lequel le composite a une épaisseur totale inférieure à 75 mils (1,9 mm).

4. Composite non-tissé selon la revendication 1, dans lequel la première couche a) a un poids de base de 1,25 à 2,5 onces par yard carré (42 à 85 grammes par mètre carré).

5. Composite non-tissé selon la revendication 1, dans lequel la seconde couche b) a un poids de base de 1,25 à 2,5 onces par yard carré (42 à 85 grammes par mètre carré).

6. Composite non-tissé selon la revendication 1, dans lequel la fibre résistant à la chaleur est une fibre de type para-aramide.

7. Composite non-tissé selon la revendication 6, dans lequel la première couche comprend 55 à 45 pour cent en poids de fibre cellulosique régénérée contenant de l'acide silicique et 45 à 55 pour cent en poids de fibre de poly(téréphtalamide de paraphénylène ), et la seconde couche comprend 25 à 40 pour cent en poids de fibre cellulosique régénérée contenant de l'acide silicique et 75 à 60 pour cent en poids de fibre de type modacrylique.

8. Composite non-tissé selon la revendication 1, dans lequel la fibre cellulosique régénérée contient de l'acide silicique.

9. Composite non-tissé selon la revendication 1, dans lequel le composite a un classement TPP supérieur à 9 calories par centimètre carré.

10. Article résistant au feu comprenant le composite non-tissé selon la revendication 1.

11. Matelas résistant au feu comprenant le composite non-tissé selon la revendication 1.

12. Procédé de fabrication d'un composite non-tissé utile pour la résistance au feu, comprenant les étapes de
a) combinaison d'une première couche et d'une seconde couche de fibres discontinues,
la première couche de fibres discontinues comprenant 75 à 25 pour cent en poids de fibre cellulosique régénérée qui conserve au moins 10 pour cent de son poids de fibre lorsque chauffée dans l'air à 700°C à une vitesse de 20 degrés C par minute et 25 à 75 pour cent en poids de fibre résistant à la chaleur, et
la seconde couche de fibres discontinues comprenant jusqu'à 75 pour cent en poids de fibre cellulosique régénérée qui conserve au moins 10 pour cent de son poids de fibre lorsque chauffée dans l'air à 700°C à une vitesse de 20 degrés C par minute et 25 à 100 pour cent en poids de fibre de type modacrylique; et
b) l'hydroliage de la première et de la seconde couche ensemble pour consolider les couches et former un composite non-tissé unitaire.

13. Procédé de fabrication d'un composite non-tissé selon la revendication 12, dans lequel la première couche de fibres discontinues est superposée sur la seconde couche de fibres discontinues avant hydroliage.

14. Procédé de fabrication d'un composite non-tissé selon la revendication 12, dans lequel la première et la seconde couche sont consolidées par hydroliage de sorte que la mesure totale de main du composite non-tissé est inférieure à 500 grams-force.

15. Procédé de fabrication d'un composite non-tissé selon la revendication 12, dans lequel la première couche de fibres discontinues a un poids de base de 1 à 5 once(s) par yard carré (34 à 170 grammes par mètre carré).

16. Procédé de fabrication d'un composite non-tissé selon la revendication 12, dans lequel la seconde couche de fibres discontinues a un poids de base de 1 à 5 once(s) par yard carré (34 à 170 grammes par mètre carré).

17. Procédé permettant de conférer la résistance au feu à un article, comprenant les étapes de
a) combinaison d'une couche de composite non-tissé résistant au feu, d'une toile à matelas ou d'une couche d'ameublement, et éventuellement d'une couche de matelassage,
b) couture des couches ensemble pour former un quilt résistant au feu ou un textile d'ameublement, et
c) incorporation du quilt ou du textile d'ameublement résistant au feu dans l'article,
le composite non-tissé résistant au feu comprenant une première couche de fibres discontinues comprenant 75 à 25 pour cent en poids de fibre cellulosique régénérée qui conserve au moins 10 pour cent de son poids de fibre lorsque chauffée dans l'air à 700°C à une vitesse de 20 degrés C par minute et 25 à 75 pour cent en poids de fibre résistant à la chaleur,
ladite première couche ayant un poids de base de 1 à 5 once(s) par yard carré (34 à 170 grammes par mètre carré); et
une seconde couche de fibres discontinues comprenant jusqu'à 75 pour cent en poids de fibre cellulosique régénérée qui conserve au moins 10 pour cent de son poids de fibre lorsque chauffée dans l'air à 700°C à une vitesse de 20 degrés C par minute, et 25 à 100 pour cent en poids de fibre de type modacrylique,
ladite seconde couche ayant un poids de base de 1 à 5 once(s) par yard carré (34 à 170 grammes par mètre carré); le composite non-tissé ayant un poids de base total de 2 à 7 onces par yard carré (68 à 237 grammes par mètre carré).

18. Procédé permettant de conférer la résistance au feu à un article selon la revendication 17, dans lequel la fibre résistant à la chaleur est une fibre de type para-aramide.

19. Procédé permettant de conférer la résistance au feu à un article selon la revendication 17, dans lequel la première couche comprend 55 à 45 pour cent en poids de fibre cellulosique régénérée contenant de l'acide silicique et 45 à 55 pour cent en poids de fibre de poly(téréphtalamide de paraphénylène), et la seconde couche comprend 25 à 40 pour cent en poids de fibre cellulosique régénérée contenant de l'acide silicique et 75 à 60 pour cent en poids de fibre de type modacrylique.

20. Procédé permettant de conférer la résistance au feu à un article selon la revendication 17, dans lequel la fibre cellulosique régénérée contient de l'acide silicique.

21. Composite non-tissé multicouche utile pour des articles résistant au feu, comprenant:
a) une première couche comprenant une fibre cellulosique régénérée qui conserve au moins 10 pour cent de son poids de fibre lorsque chauffée dans l'air à 700°C à une vitesse de 20 degrés C par minute et une fibre résistant à la chaleur, et
b) une seconde couche comprenant soit une fibre cellulosique régénérée qui conserve au moins 10 pour cent de son poids de fibre lorsque chauffée dans l'air à 700°C à une vitesse de 20 degrés C par minute et/ou une fibre de type modacrylique,
le composite non-tissé ayant un poids de base total de 2 à 7 onces par yard carré (68 à 237 grammes par mètre carré) et une épaisseur inférieure à 75 mils (1,9 mm),
ledit composite non-tissé multicouche fournissant une résistance adéquate au feu à un article incapable de passer au California Technical Bulletin 603 délivré en juillet 2003 pour permettre que l'article passe au California Technical Bulletin 603 délivré en juillet 2003 sans l'addition d'un matériau chimique ignifuge.

22. Composite non-tissé selon la revendication 21, dans lequel le composite a une mesure totale de main inférieure à 500 grams-force.

23. Article résistant au feu comprenant le composite non-tissé selon la revendication 21.

24. Matelas résistant au feu comprenant le composite non-tissé selon la revendication 21.
